# EUROPEAN PATENT APPLICATION

(11) **EP 4 651 427 A1**
(43) Date of publication of application: **19.11.2025**
(21) Application number: 24175985.1
(22) Date of filing: 15.05.2024
(51) Int. Cl.: H04L 9/08, H04L 9/12

(54) **DATA PROCESSING SYSTEM AND CORRESPONDING OPERATING METHOD**

(71) Applicant: NXP B.V., 5656 AG Eindhoven (NL)
(72) Inventor: Biberovic, Matej, 5656AG Eindhoven (NL); Rocha Ferreira Lopes Tome, António Carlos, 5656AG Eindhoven (NL)
(74) Representative: Krott, Michel

(57) **Abstract**

In accordance with a first aspect of the present disclosure, a data processing system is provided, comprising: a first host processor; a first secure element operatively coupled to the first host processor; a second secure element operatively coupled to the first host processor; wherein the first secure element is configured to function as a server and the second secure element is configured to function as a client in a client-server relationship between the first secure element and the second secure element; wherein the first secure element is configured to transmit synchronization data to the second secure element through the first host processor, wherein said synchronization data have been encrypted using a cryptographic key shared only between the first secure element and the second secure element.

## Description

### TECHNICAL FIELD

The present disclosure relates to a data processing system. Furthermore, the present disclosure relates to a corresponding method of operating a data processing system, and to a computer program for carrying out said method.

### BACKGROUND

Today, systems having multiple secure elements are increasingly used in different contexts and applications. For example, vehicle architecture design is moving towards distributed edge processing systems. As a result, multiple secure elements may be used in a vehicle, which may need its data to be synchronized across each other.

### SUMMARY

In accordance with a first aspect of the present disclosure, a data processing system is provided, comprising: a first host processor; a first secure element operatively coupled to the first host processor; a second secure element operatively coupled to the first host processor; wherein the first secure element is configured to function as a server and the second secure element is configured to function as a client in a client-server relationship between the first secure element and the second secure element; wherein the first secure element is configured to transmit synchronization data to the second secure element through the first host processor, wherein said synchronization data have been encrypted using a cryptographic key shared only between the first secure element and the second secure element.

In one or more embodiments, the first host processor is configured to trigger the first secure element to share said cryptographic key with the second secure element.

In one or more embodiments, the first host processor is further configured to trigger the first secure element to transmit the synchronization data after the cryptographic key has been shared.

In one or more embodiments, the first host processor is configured to trigger the first secure element to share said cryptographic key and transmit the synchronization data in response to the second secure element being operatively coupled to the first host processor.

In one or more embodiments, the first secure element is further configured to keep track of a synchronization state of the second secure element.

In one or more embodiments, the first secure element is further configured to delete the synchronization data after transmitting said synchronization data.

In one or more embodiments, the second secure element is configured to decrypt the synchronization data using said cryptographic key and to apply said synchronization data to one or more applications stored in said second secure element.

In one or more embodiments, the synchronization data comprise a reference to an application on which an update should be performed as well as instructions and data for performing said update.

In one or more embodiments, the synchronization data further comprise a monotonic counter value which is indicative of a specific synchronization event.

In one or more embodiments, the second secure element is configured to generate a synchronization acknowledgement and to transmit said acknowledgement to the first secure element through the first host processor.

In one or more embodiments, the data processing system further comprises at least one second host processor, wherein the second secure element is operatively coupled to the first host processor through the second host processor.

In one or more embodiments, the first secure element and the second secure element are configured to perform a mutual authentication before the cryptographic key is shared between the first secure element and the second secure element.

In one or more embodiments, an access system, in particular a vehicle access system, comprises a data processing system of the kind set forth.

In accordance with a second aspect of the present disclosure, a method of operating a data processing system is conceived, the data processing system comprising a first host processor, a first secure element operatively coupled to the first host processor, and a second secure element operatively coupled to the first host processor, and the method comprising that: the first secure element functions as a server and the second secure element functions as a client in a client-server relationship between the first secure element and the second secure element; the first secure element encrypts synchronization data using a cryptographic key shared only between the first secure element and the second secure element; the first secure element transmits the encrypted synchronization data to the second secure element through the first host processor.

In accordance with a third aspect of the present disclosure, a computer program is provided, comprising executable instructions which, when executed by a data processing system, cause the data processing system to carry out a method of the kind set forth.

### DESCRIPTION OF DRAWINGS

Embodiments will be described in more detail with reference to the appended drawings.
Fig. 1 shows an illustrative embodiment of a data processing system.
Fig. 2 shows an illustrative embodiment of a method of operating a data processing system.
Fig. 3 shows another illustrative embodiment of a data processing system.
Fig. 4 shows an illustrative embodiment of a secure binding flow.
Fig. 5 shows an illustrative embodiment of a secure synchronization flow.
Fig. 6 shows an illustrative embodiment of a secure synchronization recovery flow.

### DESCRIPTION OF EMBODIMENTS

As mentioned above, multiple secure elements may be used in a vehicle, which may need its data to be synchronized across each other. It is noted that a secure element may be defined as a tamper-resistant integrated circuit with installed or pre-installed applications, which have a prescribed functionality and a prescribed level of security. Furthermore, a secure element may implement security functions, such as cryptographic functions and authentication functions.

In an example use case, a vehicle manufacturer may implement a so-called Car Connectivity Consortium (CCC) Digital Key solution in its vehicle access systems, to enable unlocking, locking and starting the engine with a near field communication (NFC) enabled phone. In that case, there are strict timing requirements, in particular regarding the speed with which the vehicle should be unlocked after presenting an NFC-enabled phone to a reader device integrated in a door handle. However, the vehicle may contain only an NFC controller in the door handle, which forwards received access credentials to a central electronic control unit (ECU) having a secure element for verifying said credentials. In such an implementation, the access credentials are typically transmitted through a controller area network (CAN) bus, such that the secure element of the ECU can perform the verification. However, this transmission introduces an undesirable delay. It is noted that said access credentials represent an example of data which are used by an application (i.e., the vehicle unlock application) which is stored and executed in the secure element.

For this reason, a vehicle manufacturer may decide to install an additional secure element in the door handle, together with the NFC controller, such that the verification of the access credentials may be performed by the door handle itself. In that case, the above-mentioned timing requirements can be satisfied. Furthermore, additional secure elements may be installed in the vehicle for other purposes. Since the application data residing in the central secure element (i.e., the secure element of the ECU) may be modified, this information needs to be synchronized across all secure elements at various points in time. The skilled person will appreciate that it may be difficult to realize this synchronization. Generally speaking, it may be difficult to synchronize application-related data across a plurality of secure elements in a secure, yet simple manner.

Now discussed are a data processing system and a corresponding method of operating a data processing system, which enable synchronizing data across a plurality of secure elements in a secure, yet simple manner. The data processing system and corresponding method may for example be applied in an access system of the kind set forth, in particular in a vehicle access system.

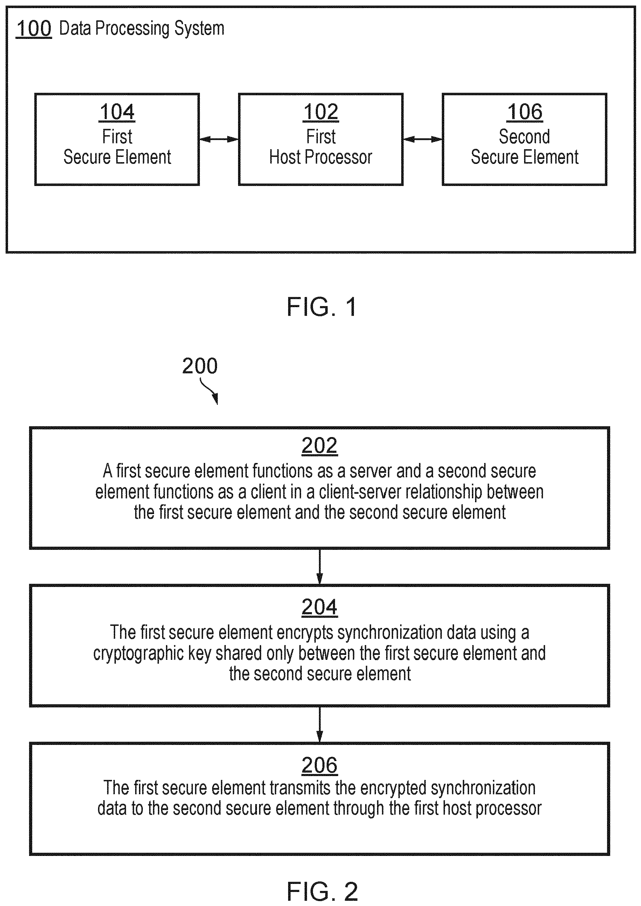

**Fig. 1** shows an illustrative embodiment of a data processing system 100. The data processing system 100 comprises a first host processor 102, a first secure element 104 operatively coupled to the first host processor 102, and at least one second secure element 106 operatively coupled to the first host processor 102. The first secure element 104 is configured to function as a server and the second secure element 106 is configured to function as a client in a client-server relationship between the first secure element 104 and the second secure element 106. Furthermore, the first secure element 104 is configured to transmit synchronization data to the second secure element 106 through the first host processor 102, wherein said synchronization data have been encrypted using a cryptographic key shared only between the first secure element 104 and the second secure element 106. Accordingly, application-related data that should be synchronized across the first secure element 104 and the second secure element 106 (referred to as "synchronization data") may be synchronized through the first host processor 102 in a relatively secure, yet simple manner. In particular, since the cryptographic key is shared only between the first secure element 104 and the second secure element 106, the first host processor 102 cannot decrypt the synchronization data, which increases the level of security. Nevertheless, the synchronization data can still easily be forwarded from the first secure element 104 (e.g., a central secure element in an ECU) to the second secure element 106 (e.g., a secure element integrated into a door handle). Examples of the synchronization data include secret key material, confidential configuration data and confidential user data. More specifically, in a scenario in which a back-end updates a key in server secure element (i.e., a first secure element) over a secure channel, this key should be synchronized with client secure elements (i.e., second secure elements).

In one or more embodiments, the first host processor is configured to trigger the first secure element to share said cryptographic key with the second secure element. In this way, a secure binding of the first secure element to the second secure element may be initiated in a practical manner. In one or more embodiments, the first host processor is further configured to trigger the first secure element to transmit the synchronization data after the cryptographic key has been shared. In this way, a secure synchronization of data across the first secure element and the second secure element may be initiated in a practical manner. Furthermore, in one or more embodiments, the first host processor is configured to trigger the first secure element to share said cryptographic key and transmit the synchronization data in response to the second secure element being operatively coupled to the first host processor. In this way, a secure element which is newly introduced into the data processing system may be synchronized with the existing secure element or elements in a practical manner.

In one or more embodiments, the first secure element is further configured to keep track of a synchronization state of the second secure element. In this way, a secure element functioning as a server secure element may easily monitor whether a client secure element should be synchronized. In one or more embodiments, the first secure element is further configured to delete the synchronization data after transmitting said synchronization data. In this way, the level of security may be further increased, since the synchronization data may no longer be available in the first secure element if said secure element would be successfully attacked at a later moment in time.

In one or more embodiments, the second secure element is configured to decrypt the synchronization data using said cryptographic key and to apply said synchronization data to one or more applications stored in said second secure element. In this way, securely transmitted synchronization data may be used to update applications of a client secure element. In one or more embodiments, the synchronization data comprise a reference to an application on which an update should be performed as well as instructions and data for performing said update. In this way, updating specific applications of a client secure element is facilitated. In one or more embodiments, the synchronization data further comprise a monotonic counter value which is indicative of a specific synchronization event. In this way, the level of security may be further increased.

In one or more embodiments, the second secure element is configured to generate a synchronization acknowledgement and to transmit said acknowledgement to the first secure element through the first host processor. In this way, a server secure element may be able to conclude that the synchronization data have been processed successfully (i.e., that the synchronization has been performed successfully), and be triggered to perform appropriate follow-up actions, if applicable. Furthermore, in one or more embodiments, the data processing system comprises at least one second host processor, wherein the second secure element is operatively coupled to the first host processor through the second host processor. Thus, data may easily and securely be synchronized in a data processing system having multiple host processors. Furthermore, in one or more embodiments, the first secure element and the second secure element are configured to perform a mutual authentication before the cryptographic key is shared between the first secure element and the second secure element. In this way, the level of security may be further increased.

**Fig.** 2 shows an illustrative embodiment of a method 200 of operating a data processing system. The method 200 comprises the following steps. At 202, a first secure element functions as a server and a second secure element functions as a client in a client-server relationship between the first secure element and the second secure element. At 204, the first secure element encrypts synchronization data using a cryptographic key shared only between the first secure element and the second secure element. Furthermore, at 206, the first secure element transmits the encrypted synchronization data to the second secure element through the first host processor. Accordingly, as explained with reference to the corresponding data processing system shown in Fig. 1, data that should be synchronized across the first secure element and the second secure element may be synchronized through the first host processor in a relatively secure, yet simple manner.

In accordance with the present disclosure, a data processing system may be provided, which includes at least one host processor which is connected to a plurality of secure elements via a wired interface. The term "host processor" refers to a processor which is included in a host device, such as a vehicle. The host processor may for example be a main controller integrated into the vehicle or an application processor integrated into the vehicle. In the latter case, the host processor may be referred to as a host application processor (AP). The plurality of secure elements includes a server secure element and one or more client secure elements. The secure elements do not communicate directly with each other. Instead, all the communication is initiated and forwarded by the host processor. This setup reflects a typical architecture in which secure elements are not directly connected to each other and are controlled by a central unit. In case there are multiple host processors, one of them initiates the communication and the communication is forwarded through one or more of them. It is noted that the server secure element may only behave as a server device in the context of data synchronization. In other contexts, this secure element may behave as a client device, which is controlled by a host processor.

The secure elements may share non-exportable cryptographic keys, which are used to secure the indirect data channel between them. The operation of setting up those keys may be referred to as "Secure Binding". When an operation requiring synchronization is performed on the server secure element, the server secure element may prepare the synchronization data and indicate this to the host processor. Furthermore, the host processor may provide the synchronization data to all the client secure elements and their confirmations (i.e., synchronization acknowledgements) back to the server secure element. This operation may be referred to as "Secure Synchronization". When a new client secure element is introduced into the system, the host processor may trigger the binding and full synchronization flows between the server secure element and the new client secure element. The system may be designed to work fully offline, without the need to connect to any backend system.

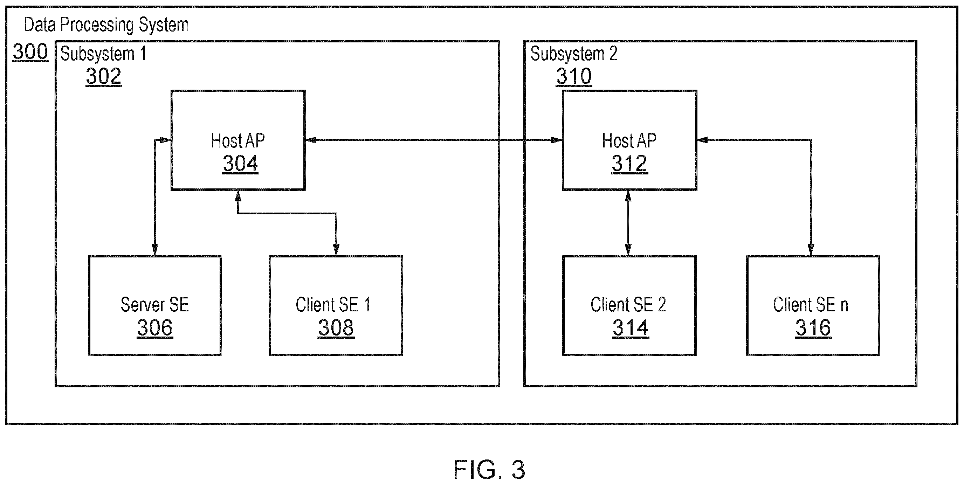

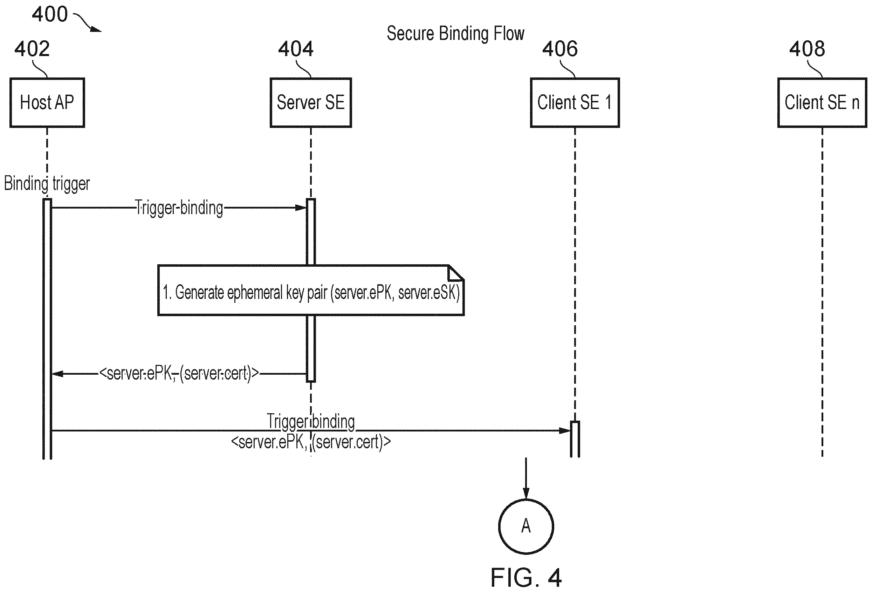

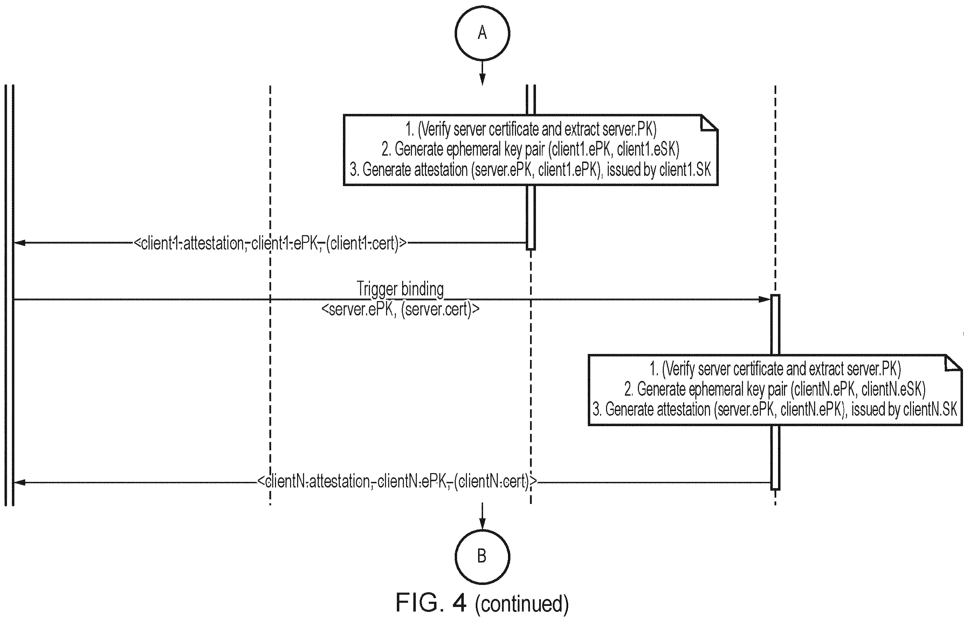

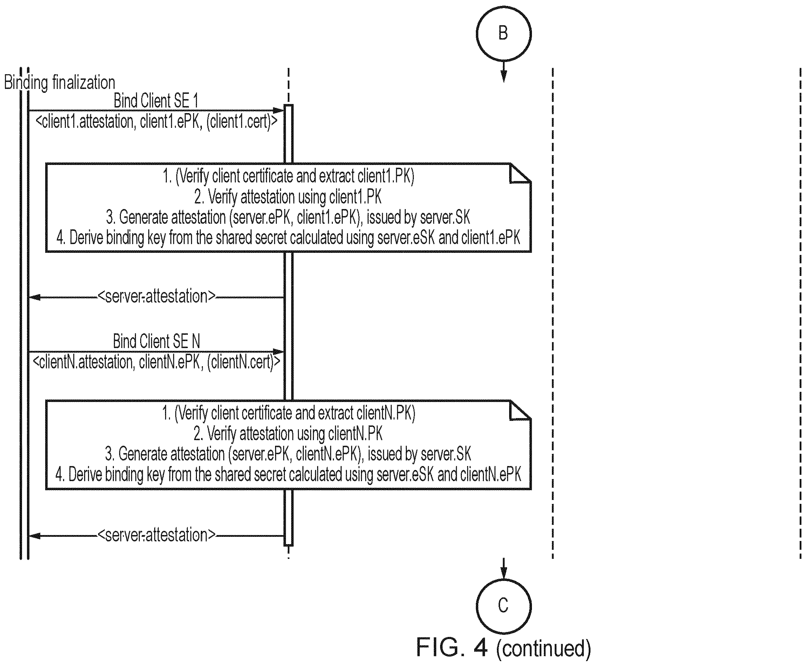

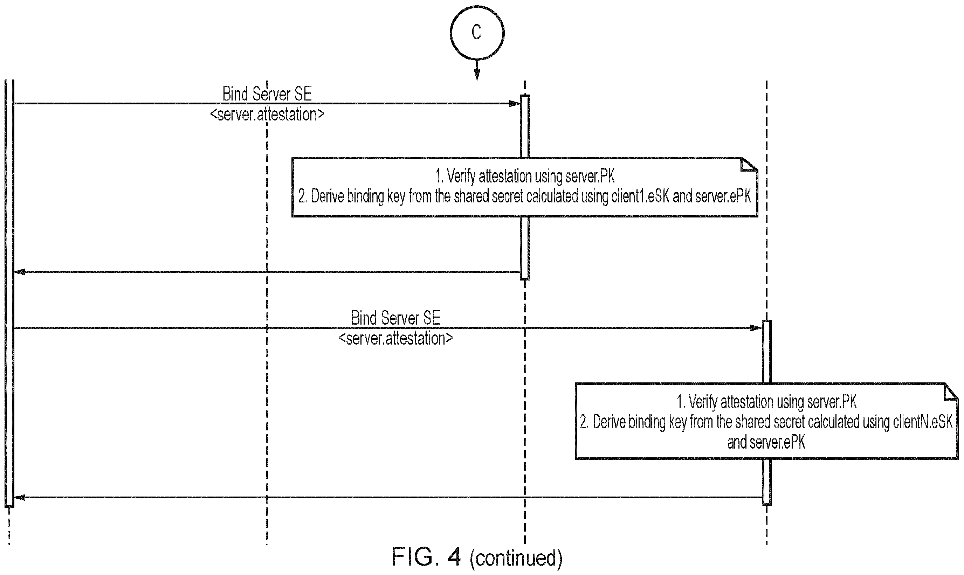

**Fig. 3** shows another illustrative embodiment of a data processing system 300. The system 300 comprises two subsystems 302, 310. The first subsystem 302 comprises a host application processor 304, a server secure element 306 and a first client secure element 308. The second subsystem 310 comprises another host application processor 312, a second client secure element 314 and one or more further secure elements 316, denoted as "client secure element n". In operation, the server secure element 306 transmits synchronization data to the first secure element 308 through the application processor 304 of the first subsystem 302. Furthermore, the server secure element 306 transmits said synchronization data to the second and further client secure elements 314, 316 through both application processors 304, 312. The synchronization data have been encrypted using a cryptographic key that has been shared only between the server secure element 306 and the respective client secure element 308, 314, 316. An example of such a cryptographic key is the below-mentioned client-specific binding key, which is derived in the secure binding flow shown in Fig. 4.

It is noted that the binding process and the synchronization process may be protected against active or passive eavesdropping and content manipulation. Furthermore, new client secure elements may be introduced into the data processing system 300 at any time. Furthermore, existing client secure elements 308, 314, 316 may be removed from the data processing system 300 at any time. In some implementations, the server secure element 306 may be replaced, if needed. Furthermore, the host application processor 304 does not need to keep any synchronization state information. Furthermore, in case of an interrupted synchronization (e.g., a power loss), the synchronization process may be resumed or replayed.

Furthermore, it is noted that the host application processor 304 may trigger both the binding process and the synchronization process. In addition, the host application processor 304 may determine if synchronization is required, and forward binding and synchronization payloads between the server secure element 306 and the client secure elements 308, 314, 316. The server secure element 306 may keep track of all client synchronization states, generate the binding and synchronization payloads, and clear the synchronization payloads in its memory after they have been transmitted successfully. Furthermore, each client secure element 308, 314, 316 may keep track of its own synchronization state, apply received synchronization payloads, generate synchronization payload receipts, and generate binding payloads.

**Fig. 4** shows an illustrative embodiment of a secure binding flow 400. In particular, it is shown that a host application processor 402 triggers the binding of a server secure element 404 to a plurality of client secure elements 406, 408, and how this binding is carried out. In the example shown in Fig. 4, trust anchors are pre-provisioned in all the secure elements 404, 406, 408. The trust anchors are used to mutually authenticate the server secure element 404 and the client secure elements 406, 408, which then securely exchange the keys required for the subsequent synchronization phase. The key exchange is based on the Diffie-Helman key agreement algorithm. The trust anchors may for example be root certificate authorities (CAs) or intermediate CAs, which have control over the secure-element provisioning process. Instead of a CA, the trust anchor may also be a client/server secure element directly. This allows a stricter control of binding pairs. An example of the latter is that a backend server provisions the public key of a new client secure element directly. More specifically, a new door handle may be installed at a vehicle vendor site and a vehicle original equipment manufacturer (OEM) may load said public key via backend system to the server secure element as "trusted".

When a client secure element 406, 408 is first introduced in the system, the host application processor 404 triggers a binding procedure in which the server secure element 404 generates the ephemeral key pair. The ephemeral public key is forwarded to each client secure element 406, 408 that requires binding. Each client secure element 406, 408 generates its own ephemeral key and attestation. The attestation includes both the ephemeral public keys from the server secure element 404 and the respective client secure element 406, 408 and is issued by the client secure element using its long-term private key. The client ephemeral public keys and attestations are forwarded to the server secure element 404, which verifies the client attestation and generates its own attestation (issued by the server secure element using its long-term private key). Having successfully authenticated the client secure element 406, 408, the shared secret is generated and used to derive a client-specific binding key. Finally, the host application processor 402 forwards the server attestation to each of the client secure elements 406, 408, which authenticate the server secure element 404 and derive the shared binding key. To confirm the correct derivation of the binding keys, the synchronization flow is triggered by the host application processor 402. If root CAs or intermediate CAs are used as a trust anchor, the server/client certificates are also shared as a part of the data exchange described above.

The skilled person will appreciate that, in the above-described example, it is assumed that the server secure element 404 and client secure elements 406, 408 allow pre-provisioning of trust anchors. Furthermore, it is assumed that the binding implementation is protected against man-in-the-middle (MITM) and replay attacks, and that it is not possible to replace trust anchors without a proper authentication. Furthermore, it is assumed that the server secure element 404 should authenticate the client secure elements 406, 408 before binding, and that the client secure elements 406, 408 should authenticate the server secure element 404 before binding. Finally, it is assumed that the server secure element 404 persistently stores one binding key per each bound client secure element 406, 408, and that each client secure element 406, 408 persistently stores only one binding key at once.

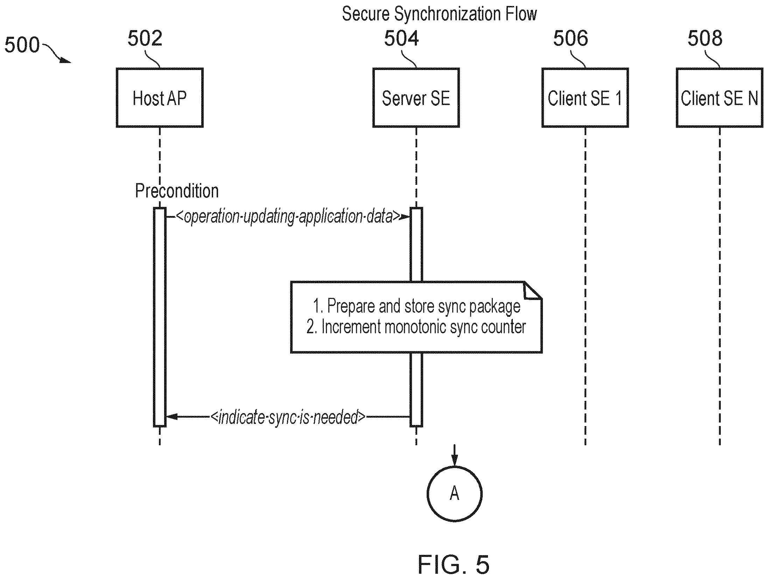

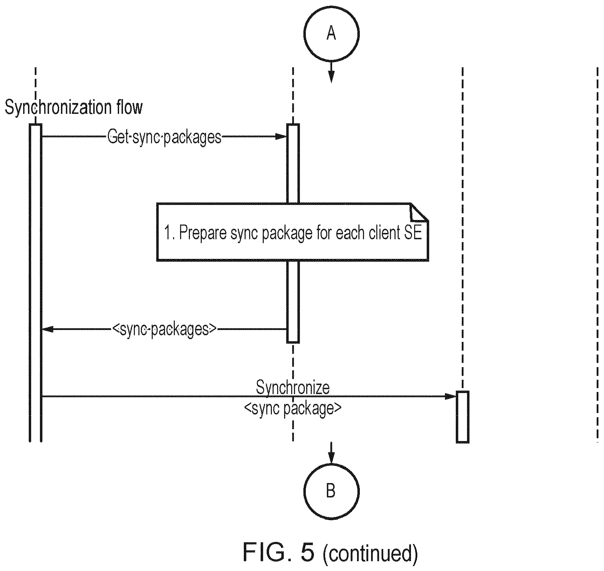

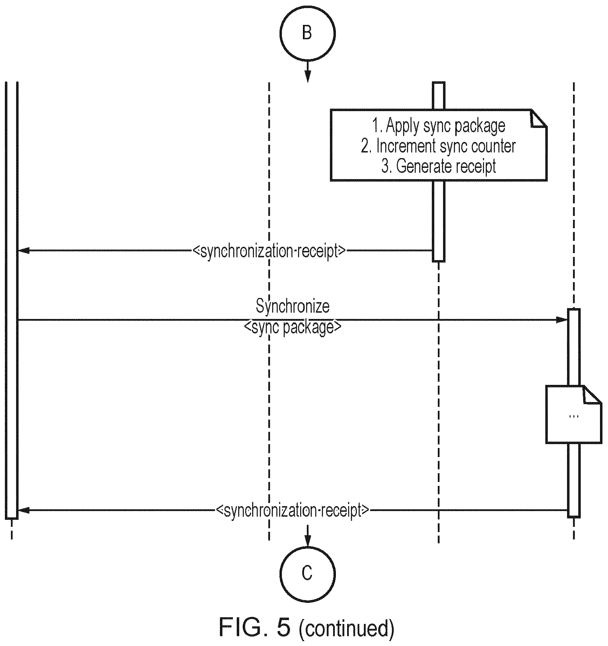

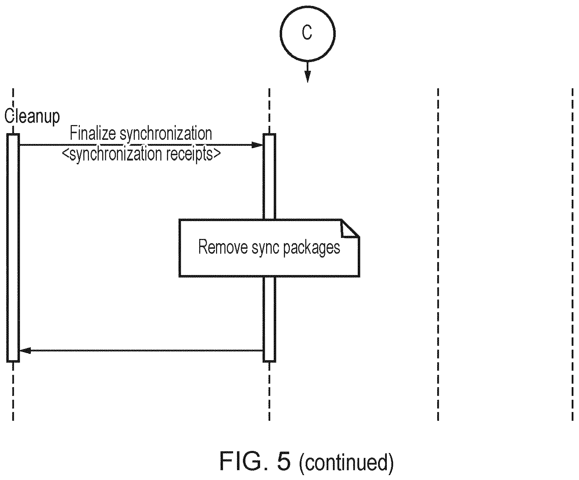

**Fig. 5** shows an illustrative embodiment of a secure synchronization flow 500. In particular, it is shown how data is synchronized between a server secure element 504 and a plurality of client secure elements 506, 508, through a host application processor 502. More specifically, updates which are performed on the server secure element 504 are distributed to all the client secure elements 506, 508. This kind of synchronization may be referred to as unidirectional synchronization or mirroring. When an operation is performed on the server secure element 504, which requires data to be synchronized with other client secure elements 506, 508, then the server secure element 504 stores the change or "delta" information of this operation and signals this to the host application processor 502. This information is stored as a "sync package", which represents an example of the synchronization data of the kind set forth above. The sync package may include at least the following payload: a reference to the application performing the operation, a monotonic counter indicating unique number of synchronization event, application-specific instructions of the operation (e.g., store key X with object Y; remove object Z), and a reference to the client secure element (e.g. its unique identifier). The sync package is stored in the server secure element 504 until it is not needed anymore. This may for example be the case when all the secure elements have been synchronized successfully. Alternatively, the sync package may be dropped immediately (reducing persistent memory footprint) with a drawback that a full re-synchronization is needed in case of interruptions.

When the sync package is exported from the server secure element 504, it is encrypted and authenticated (e.g., using an authenticated encryption scheme such as AES-GCM). For this purpose, the aforementioned binding key (or a derivation thereof) is used. Then, only the client secure elements 506, 508 which were previously bound can verify and decrypt the payloads. Once a client secure element 506, 508 receives a sync package, it applies the operation indicated in the payload, but only if it is applicable. In this example, this means that the current synchronization event count should be one less than the targeted count. If this is not the case, the full re-synchronization should be done, which means that the server secure element 504 should prepare a sync package that includes all the data required for synchronization. This for example also allows the introduction of a new client secure element into the data processing system. If the sync package is successfully applied, the client secure element 506, 508 matches the counter value and generates a "sync receipt", which is a cryptographic proof of synchronization. The sync receipt represents an example of a synchronization acknowledgement of the kind set forth above. The sync receipt may be provided to the server secure element 504 as a means to clear the stored sync package.

The skilled person will appreciate that, in the above-described example, it is assumed that the server secure element 504 keeps track of all the client sync level counters, and the client secure elements 506, 508 keep track of their individual sync level counters. Furthermore, it is assumed that the synchronization is re-playable until it is complete, that it is confirmed with a receipt (e.g., a signature over the sync counter and a challenge), and that the server secure element 504 is able to remove sync packages once it is confirmed that they have been applied. Furthermore, it is assumed that a full re-synchronization is possible (e.g., if a client secure element 506, 508 is replaced), also with lower sync level counter (e.g., if the server secure element 506, 508 is replaced). In addition, it is assumed that a data structure for the sync package is application-specific. Finally, it is assumed that the server secure element 504 provides an interface for exporting sync packages and for clearing sync packages, and that the client secure elements 506, 508 provide an interface for importing sync packages.

Table 1 shows an example of the content of a sync package, as a list of tag-length-value (TLV) encoded elements. Table 2 shows an example of the content of a sync receipt, as a list of TLV encoded elements.

**Table 1**

| **Tag** | **Length** | **Value** |
|---|---|---|
| '80' | 5-16 | Application identifier (AID) |
| '81' | 4 | Sync counter |
| 'A0' | Var. | Application-specific update instructions (TLV encoded) |

**Table 2**

| **Tag** | **Length** | **Value** |
|---|---|---|
| '80' | 5-16 | Application identifier AID |
| '81' | 4 | Applied sync counter |
| '82' | 20 | Secure Element Unique Identifier |

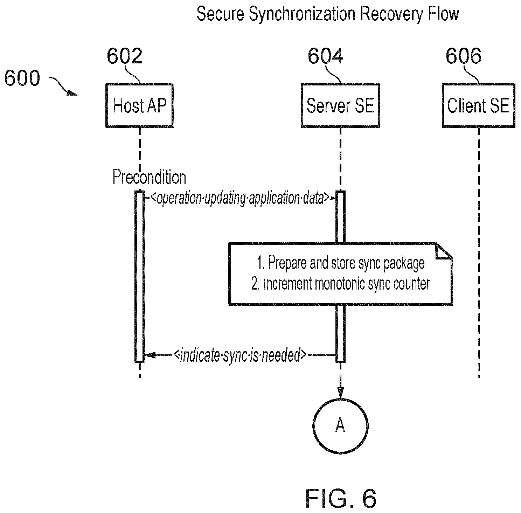

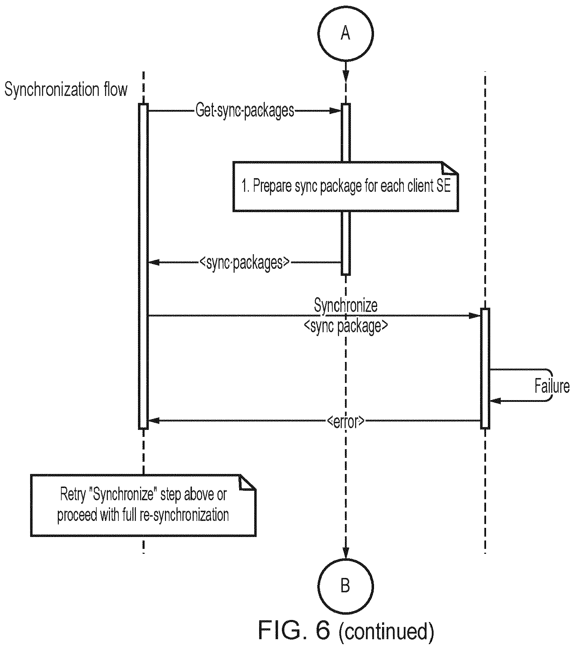

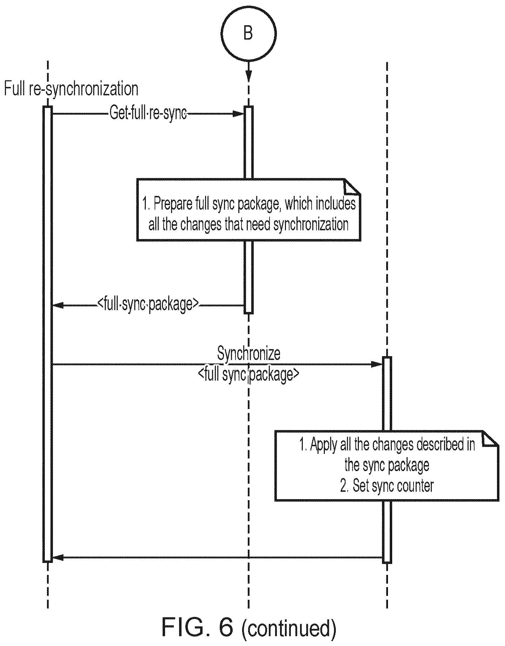

**Fig. 6** shows an illustrative embodiment of a secure synchronization recovery flow 600. In particular, it is shown how a synchronization of data between a server secure element 604 and a client secure element 606, which takes place through a host application processor 602, may be recovered in case of failures during the resynchronization. More specifically, the steps of transmitting the sync package by the server secure element 604 and applying the sync package by the client secure element 604 may be retried one or more times, or a full re-synchronization may be carried out if the retry attempts are unsuccessful.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE NUMBERS

- 100: data processing system
- 102: first host processor
- 104: first secure element
- 106: second secure element
- 200: method of operating a data processing system
- 202: a first secure element functions as a server and a second secure element functions as a client in a client-server relationship between the first secure element and the second secure element
- 204: the first secure element encrypts synchronization data using a cryptographic key shared only between the first secure element and the second secure element
- 206: the first secure element transmits the encrypted synchronization data to the second secure element through the first host processor
- 300: data processing system
- 302: subsystem 1
- 304: host application processor
- 306: server secure element
- 308: client secure element 1
- 310: subsystem 2
- 312: host application processor
- 314: client secure element 2
- 316: client secure element n
- 400: secure binding flow
- 402: host application processor
- 404: server secure element
- 406: client secure element 1
- 408: client secure element N
- 500: secure synchronization flow
- 502: host application processor
- 504: server secure element
- 506: client secure element 1
- 508: client secure element N
- 600: secure synchronization recovery flow
- 602: host application processor
- 604: server secure element
- 606: client secure element

## Claims

1. A data processing system, comprising:
a first host processor;
a first secure element operatively coupled to the first host processor;
a second secure element operatively coupled to the first host processor;
wherein the first secure element is configured to function as a server and the second secure element is configured to function as a client in a client-server relationship between the first secure element and the second secure element;
wherein the first secure element is configured to transmit synchronization data to the second secure element through the first host processor, wherein said synchronization data have been encrypted using a cryptographic key shared only between the first secure element and the second secure element.

2. The data processing system of claim 1, wherein the first host processor is configured to trigger the first secure element to share said cryptographic key with the second secure element.

3. The data processing system of claim 2, wherein the first host processor is further configured to trigger the first secure element to transmit the synchronization data after the cryptographic key has been shared.

4. The data processing system of claim 2 and 3, wherein the first host processor is configured to trigger the first secure element to share said cryptographic key and transmit the synchronization data in response to the second secure element being operatively coupled to the first host processor.

5. The data processing system of any preceding claim, wherein the first secure element is further configured to keep track of a synchronization state of the second secure element.

6. The data processing system of any preceding claim, wherein the first secure element is further configured to delete the synchronization data after transmitting said synchronization data.

7. The data processing system of any preceding claim, wherein the second secure element is configured to decrypt the synchronization data using said cryptographic key and to apply said synchronization data to one or more applications stored in said second secure element.

8. The data processing system of any preceding claim, wherein the synchronization data comprise a reference to an application on which an update should be performed as well as instructions and data for performing said update.

9. The data processing system of claim 8, wherein the synchronization data further comprise a monotonic counter value which is indicative of a specific synchronization event.

10. The data processing system of any preceding claim, wherein the second secure element is configured to generate a synchronization acknowledgement and to transmit said acknowledgement to the first secure element through the first host processor.

11. The data processing system of any preceding claim, comprising at least one second host processor, wherein the second secure element is operatively coupled to the first host processor through the second host processor.

12. The data processing system of any preceding claim, wherein the first secure element and the second secure element are configured to perform a mutual authentication before the cryptographic key is shared between the first secure element and the second secure element.

13. An access system, in particular a vehicle access system, comprising the data processing system of any preceding claim.

14. A method of operating a data processing system, the data processing system comprising a first host processor, a first secure element operatively coupled to the first host processor, and a second secure element operatively coupled to the first host processor, and the method comprising that:
the first secure element functions as a server and the second secure element functions as a client in a client-server relationship between the first secure element and the second secure element;
the first secure element encrypts synchronization data using a cryptographic key shared only between the first secure element and the second secure element;
the first secure element transmits the encrypted synchronization data to the second secure element through the first host processor.

15. A computer program comprising executable instructions which, when executed by a data processing system, cause the data processing system to carry out the method of claim 14.

## Amended claims

### Amended claims in accordance with Rule 137(2) EPC.

1. A vehicle access system comprising a data processing system (100), said data processing system (100) comprising:
a first host processor (102) being a main controller or application processor integrated into a vehicle;
a first secure element (104) operatively coupled to the first host processor (102);
a second secure element (106) operatively coupled to the first host processor (102);
wherein the first secure element (104) is configured to function as a server and the second secure element (106) is configured to function as a client in a client-server relationship between the first secure element (104) and the second secure element (106);
wherein the first secure element (104) is configured to transmit synchronization data to the second secure element (106) through the first host processor (102), wherein the synchronization data comprise a reference to an application on which an update should be performed as well as instructions and data for performing said update, and wherein said synchronization data have been encrypted using a cryptographic key shared only between the first secure element (104) and the second secure element (106).

2. The vehicle access system of claim 1, wherein the first host processor (102) is configured to trigger the first secure element (104) to share said cryptographic key with the second secure element (106).

3. The vehicle access system of claim 2, wherein the first host processor (102) is further configured to trigger the first secure element (104) to transmit the synchronization data after the cryptographic key has been shared.

4. The vehicle access system of claim 2 and 3, wherein the first host processor (102) is configured to trigger the first secure element (104) to share said cryptographic key and transmit the synchronization data in response to the second secure element (106) being operatively coupled to the first host processor (102).

5. The vehicle access system of any preceding claim, wherein the first secure element (104) is further configured to keep track of a synchronization state of the second secure element (106).

6. The vehicle access system of any preceding claim, wherein the first secure element (104) is further configured to delete the synchronization data after transmitting said synchronization data.

7. The vehicle access system of any preceding claim, wherein the second secure element (106) is configured to decrypt the synchronization data using said cryptographic key and to apply said synchronization data to one or more applications stored in said second secure element (106).

8. The vehicle access system of any preceding claim, wherein the synchronization data further comprise a monotonic counter value which is indicative of a specific synchronization event.

9. The vehicle access system of any preceding claim, wherein the second secure element (106) is configured to generate a synchronization acknowledgement and to transmit said acknowledgement to the first secure element (104) through the first host processor (102).

10. The vehicle access system of any preceding claim, wherein the data processing system (100) at least one second host processor, wherein the second secure element (106) is operatively coupled to the first host processor (102) through the second host processor.

11. The vehicle access system of any preceding claim, wherein the first secure element (104) and the second secure element (106) are configured to perform a mutual authentication before the cryptographic key is shared between the first secure element (104) and the second secure element (106).

12. A method of operating a data processing system comprised in a vehicle access system, the data processing system comprising a first host processor being a main controller or application processor integrated into a vehicle, a first secure element operatively coupled to the first host processor, and a second secure element operatively coupled to the first host processor, and the method comprising that:
the first secure element functions as a server and the second secure element functions as a client in a client-server relationship between the first secure element and the second secure element;
the first secure element encrypts synchronization data using a cryptographic key shared only between the first secure element and the second secure element, wherein the synchronization data comprise a reference to an application on which an update should be performed as well as instructions and data for performing said update;
the first secure element transmits the encrypted synchronization data to the second secure element through the first host processor.

13. A computer program comprising executable instructions which, when executed by a data processing system, cause the data processing system to carry out the method of claim 12.
